# EUROPÄISCHE PATENTANMELDUNG

(11) **EP 1 176 729 A1**
(43) Veröffentlichungstag der Anmeldung: **30.01.2002**
(21) Anmeldenummer: 00116411.0
(22) Anmeldetag: 28.07.2000
(51) Int. Cl.: H04B 1/38, H04M 1/725, H04M 1/02

(54) **Modulares System zum Einbau einer drahtlosen Kommunikationseinheit in Gehäuse unterschiedlicher Ausprägungen**

(71) Anmelder: SIEMENS AKTIENGESELLSCHAFT, 80333 München (DE)
(72) Erfinder: Holz auf der Heide, Bernd, 81549 München (DE)

(57) **Zusammenfassung**

Modulares System zum Einbau eines drahtlosen Kommunikationsgerätes in Gehäuse mit unterschiedlichen Ausprägungen, mit einer standardisierten Schnittstelle zwischen einem Funkmodul und einer als Gehäuse dienenden Geräteeinheit, wobei diese als Gehäuse dienende Geräteeinheit, z.B. in Form eines Plüschtiers, z.B. mit Bedienelementen und mit Ein/Ausgabeelmenten ausgestattet sein kann, die in ihrer Ausprägung für die Ausprägung der Art des Gehäuses typisch oder spezifisch sind.

## Beschreibung

Bisherige schnurlose Kommunikationsprodukte (z.B. GSM-Handys) bilden eine in sich geschlossene konstruktive Einheit aus elektrischer Hardware und Gehäuse. Somit können weder das Aussehen noch die Ein- und Ausgabeelemente und Interaktionsmechanismen des Produktes wesentlich verändert werden. Aus wirtschaftlichen Gründen ist es daher kaum vertretbar, relativ kleine Stückzahlen spezifischer Kommunikationsprodukte für bestimmte Zielgruppen und Märkte (z.B. sechs- bis achtjährige japanische Kinder) herzustellen, da dies jeweils eine Neukonstruktion und -entwicklung erfordern würde. Aus Marketingsicht ist es jedoch wichtig, spezifische Zielgruppen durch speziell darauf abgestimmte Produkte anzusprechen. Dies gilt insbesondere bei gesättigten Märkten mit hohem Wettbewerbsdruck, wie sie mittelfristig auch im Bereich der Mobiltelefonie zu erwarten sind.

Bisher gab es die grundsätzliche Möglichkeit, das Aussehen und die Ein- und Ausgabeelemente eines schnurlosen Kommunikationsproduktes (z.B. GSM-Handy) durch einen mehr oder weniger modularisierten Aufbau des Gerätes zu verändern. Ein einfaches Beispiel hierfür sind wechselbare Gehäuseschalen, durch die sich die Farbgebung sowie ggfs. auch die Oberflächenstruktur des Produkts verändern lassen.
Eine wirklich gezielte Ansprache unterschiedlicher Zielgruppen ist damit aber nur eingeschränkt möglich.

Die Erfindung umfaßt ein modulares System zur Integration einer mechanisch und elektrisch standardisierten schnurlosen Kommunikationseinheit (z.B. GSM-Phonemodul) in verschiedene Gehäuseformen (z.B. Teddy). Die jeweiligen Gehäuseformen können mit sehr unterschiedlichen Ein- und Ausgabeelementen sowie ggfs. weiteren technischen Elementen (z.B. Temperaturfühler, Schrittmotor) ausgestattet sein. Die Verbindung zwischen der generischen Kommunikationseinheit und der diese Einheit umgebenden Gehäuseform mit unterschiedlichen Ein- und Ausgabeelementen und ggfs. weiteren Elementen erfolgt über eine definierte I/O-Schnittstelle bzw. einen standardisierten Schnittstellenbus. Die einzelnen Signal- bzw. Pegelwege der I/O-Schnittstelle verwenden dabei jeweils übliche Übertragungs- bzw. Steuerungsprotokolle und -pegel (z.B. "I²C" für Display, "Seriell" für Schrittmotoren, "NF-Analog" für Lautsprecher und Mikrofon usw.).

Auf diese Weise ermöglicht es ein solches System, einerseits eine standardisierte Kommunikationseinheit (z.B. GSM-Phonemodul) in einer hohen Stückzahl zu verwenden, was im Sinne einer Kostendegression sinnvoll ist, und andererseits die das Modul umgebende Gehäuseform mit den spezifischen Ein- und Ausgabeelementen und ggfs. den weiteren technischen Elementen ganz gezielt auf eine Zielgruppe (z.B. 6-9 jährige Kinder) auszurichten, was die Benutzer- und Marktakzeptanz des Gerätes wesentlich erhöht.

Die Entwicklung und Produktion der Kommunikationseinheit (z.B. GSM-Phonemodul) kann dabei von einem darauf spezialisierten Elektrohersteller geleistet werden, während die Fertigung der jeweiligen zielgruppenspezifischen Gehäuseform (z.B. Teddybär mit Tastenkontakten in den Händen) von darauf spezialisierten Herstellern (z.B. aus der Spielwarenbranche) geleistet werden kann. Bei entsprechend ausgelegtem Schnittstellenbus sind somit sehr variationsreiche und attraktive Produktlösungen möglich (z.B. sprechendes Plüschtier mit motorgesteuerten Mundbewegungen).

Da es sich bei der technischen Kommunikationseinheit (z.B. GSM-Phonemodul) um ein universell einsetzbares Modul mit umfassendem I/O-Schnittstellenbus handelt (siehe Ausführungsbeispiel), können selbst vergleichsweise geringe Stückzahlen einer spezifischen Produktausprägung gewinnbringend vermarktet werden.
Die Erfindung bietet somit eine ganze Reihe von Möglichkeiten und Vorteilen:

Individuelle Gestaltung bzw. Ausprägung eines schnurlosen Kommunikationsendgerätes (z.B. GSM-Handy) und dadurch sehr gezielte Anpassung an die Wünsche und Bedürfnisse einer bestimmten Zielgruppe (z.B. Kinder). Dies resultiert in einer Steigerung des am Markt erzielbaren Verkaufspreises (vgl. Plüschtiere, die gerade "in" sind) sowie der Zufriedenheit und Kundenbindung der avisierten Zielgruppe und des generellen Markenimages.

Neue Varianten mit unterschiedlichem Aussehen und jeweils spezifischen Ein- und Ausgabeelementen und Interaktionsmechanismen sind schnell und kostengünstig realisierbar, etwa bei neuen Markttrends (z.B. Diddel-Maus, Pokemon-Figuren).

Die empfindliche Elektronik des schnurlosen Kommunikationsgerätes befindet sich in einem geschlossenen Modulgehäuse, das keinerlei elektromechanischen Bewegteile aufweist und zudem vom eigentlichen Gehäuse (z.B. Plüschtier) umhüllt wird, was einen hohen mechanischen Schutz bietet.
Das eigentliche Außengehäuse (z.B. Plüschtier) enthält in der Regel keine komplexen oder empfindlichen technischen Ein- und Ausgabeelemente, was in Verbindung mit der mechanisch einfachen Integration des standardisierten Kommunikationsmoduls zu vergleichsweise geringen Produktionskosten führt. Technische Störungen bzw. Fehlfunktionen können über die definierte Schnittstelle sehr einfach diagnostiert und durch Austausch der betroffenen Komponente sehr schnell behoben werden. Möglichkeit eines Zusatzgeschäfts durch Vergabe von Lizenzen an Spielwarenhersteller, die für die technische Kommunikationseinheit (z.B. GSM-Phonemodul) bzw. deren standardisierte Schnittstelle passende Gehäuseausprägungen bzw. Figuren mit spezifischen Ein- und Ausgabeelementen etc. produzieren (z.B. Auge einer Figur öffnet sich bei einem Anruf).

Durch die Trennung zwischen dem eigentlichen Kommunikationsmodul und dem Gehäuse mit spezifischen Ein- und Ausgabeelementen, die über eine definierte Schnittstelle mit dem Modul verbunden sind, können verschiedene Hersteller ganz unterschiedliche Varianten - z.B. für lokale Märkte - unabhängig voneinander parallel entwickeln und vermarkten (vgl. z.B. Peripheriemodule für Computer). Hier sind interessante Geschäftsmodelle realisierbar, die das betriebswirtschaftliche Risiko für den Hersteller der Kommunikationseinheit (z.B. GSM-Phonemodul) minimieren und gleichzeitig das Gewinnpotential maximieren.
Sehr hohe Stückzahlen und lange Laufzeit der standardisierten Kommunikationseinheit (z.B. GSM-Phonemodul), da es durch den flexibel ausgelegten Schnittstellenbus auch für zukünftige marktrelevante Ausprägungsformen des konkreten Produkts verwendet werden kann. D.h. es können immer wieder neue Produkte auf den Markt gebracht werden, ohne daß beim Hersteller der Kommunikationselektronik zusätzliche Kosten für Neuentwicklungen etc. anfallen.

Der erfinderische Grundgedanke besteht in der Verknüpfung bzw. Integration einer (1) generischen Kommunikationseinheit (z.B. GSM-Phonemodul) mit definierter I/O-Schnittstelle bzw. standardisiertem I/O-Schnittstellenbus mit (2) ganz unterschiedlich ausgeprägten Gehäuseformen bzw. Hüllen, die z.B. auf bestimmte Zielgruppen ausgerichtet sind. Die unterschiedlichen Gehäuseausprägungen können dabei unterschiedliche Eingabe- und Ausgabeelemente, Interaktionsmechanismen sowie ggfs. weitere technische Elemente (z.B. Temperatur-, Wackelsensor, Schrittmotor etc.) aufweisen, die über die Schnittstelle und entsprechende Protokolle (z.B. "I²C" für Display, "Seriell" für Schrittmotoren) an die Kommunikationseinheit (z.B. GSM-Phonemodul) angeschlossen und angesprochen werden können.

## Patentansprüche

1. Modulares System zum Einbau eines drahtlosen Kommunikationsgerätes in Gehäuse mit unterschiedlichen Ausprägungen, **gekennzeichnet durch** eine standardisierte Schnittstelle zwischen einem Funkmodul und einer als Gehäuse dienenden Geräteeinheit.
